# EUROPÄISCHE PATENTSCHRIFT

(11) **EP 0 309 796 B1**
(45) Veröffentlichungstag und Bekanntmachung des Hinweises auf die Patenterteilung: **30.06.1993**
(21) Anmeldenummer: 88114813.4
(22) Anmeldetag: 09.09.1988
(51) Int. Cl.: B60T 7/22, B60T 7/12, B66F 17/00

(54) **Sicherheitseinrichtung für Gabelfahrzeuge**
Security device for fork-lift trucks
Dispositif de sécurité pour chariots à fourche

(30) Priorität: 29.09.1987 DE 3732724
(43) Veröffentlichungstag der Anmeldung: 05.04.1989
(73) Patentinhaber: Jungheinrich Aktiengesellschaft, 22047 Hamburg (DE)
(72) Erfinder: Hachmann, Hans-Jürgen, Dipl.-Ing., D-2200 Elmshorn (DE); Hoener, Siegfried, Dr.-Ing., D-2000 Hamburg 61 (DE)
(74) Vertreter: Patentanwälte Hauck, Graalfs, Wehnert, Döring, Siemons

(56) Entgegenhaltungen:
- EP-A- 0 052 088
- DE-A- 3 147 278
- GB-A- 1 151 693
- GB-A- 2 014 773
- US-A- 4 088 856
- PATENT ABSTRACTS OF JAPAN vol. 10, no. 62 (M-460)(2119) 12 März 1986,& JP-A-60 206759 (TOSHIBA) 18 Oktober 1985,

## Beschreibung

Die Erfindung bezieht sich auf eine Sicherheitseinrichtung für Gabelfahrzeuge nach dem Oberbegriff des Patentanspruchs 1.

Als Auffahrschutz dienende Sicherheitseinrichtungen für fahrergesteuerte oder fahrerlose Fahrzeuge sind in verschiedenen Ausführungsformen bekannt. Sie sollen sicherstellen, daß bei Kollision des Fahrzeugs mit einem Hindernis das Fahrzeug auf einer möglichst kurzen Strecke zum Stillstand gebracht wird. Aus der EP-A-0 052 088 ist eine Sicherheitseinrichtung für ein Gabelfahrzeug bekannt geworden, bei dem beidseits des die Last aufnehmenden Raumes parallele, sich bis vor die Last erstreckende Seitenstreben fahrzeugfest angeordnet sind. An den freien Enden der Seitenstreben sind Teleskopabschnitte angeordnet, die beim Auftreffen auf ein Hindernis in die Seitenstreben einfahren und einen Notstop auslösen. Ferner sind zwischen den Teleskopabschnitten zwei beabstandete, aus Sendern und Empfängern bestehende Schranken aufgebaut sowie an jedem Teleskopabschnitt zwischen den Sendern bzw. Empfängern ein Berührungsschalter angebracht. Wird die vordere Schranke unterbrochen, so wird auf Schleichfahrt geschaltet. Werden anschließend beide Berührungsschalter betätigt, was bei der Lastaufnahme der Fall ist, so wird dadurch ein Notstop unterbunden, während bei einem Hindernis (z.B. eine Person) die Berührungsschalter normalerweise nicht gleichzeitig ansprechen, wodurch dann die Unterbrechung der hinteren Schranke einen Notstop bewirkt. Die bekannte Sicherheitseinrichtung mit den fahrzeugfesten Seitenstreben kann bei Lastaufnahme und der -abgabe ein Hindernis darstellen. Die Seitenstreben dürfen während dieser Betriebsphase nicht verstellt werden, da anderenfalls die gewünschte automatische Lastaufnahme nicht gewährleistet ist.

Der Erfindung liegt die Aufgabe zugrunde, eine Auffahrschutzeinrichtung für Gabelfahrzeuge zu schaffen, die eine ungehinderte Aufnahme der Last ermöglicht, gleichwohl während der Betriebsfahrt einen sicheren Auffahrschutz zu allen Seiten gewährleistet und schließlich eine Lastsicherung zu allen Seiten ermöglicht und damit eine Betriebsfahrt mit erhöhter Geschwindigkeit.

Diese Aufgabe wird erfindungsgemäß gelöst durch die Merkmale des Patentanspruchs 1.

Bei der erfindungsgemäßen Auffahrschutzeinrichtung ist der die Last aufnehmende Raum von einem Bügel umgeben, der zur Handhabung einer Last aus seiner Betriebsstellung herausbewegbar ist. Bei einer Berührung des Bügels, von welcher Seite immer, wird ein Notstopsignal ausgelöst. Der Bügel sichert den lastaufnehmenden Raum zu allen Seiten, kann jedoch zur freien Handhabung der Last in eine Stellung gebracht werden, die außerhalb des Handhabungsbereiches liegt.

Vorteilhafte Weiterbildungen des Anspruchs 1 sind in den Unteransprüchen angegeben.

Die Erfindung wird nachfolgend anhand von Ausführungsbeispielen näher erläutert.
- Fig. 1: eine Seitenansicht eines Fahrzeuges mit einer speziellen Ausführung der Sicherheitseinrichtung in der Einsatzstellung und in gestrichelten Linien in einer ausgerückten Stellung;
- Fig. 2: eine perspektivische Ansicht des Fahrzeuges nach Fig. 1, schematisch beispielsweise schräg von vorn mit in Einsatzstellung befindlicher Sicherheitseinrichtung; wobei die Räder verdeckt sind;
- Fig. 3: eine der Fig. 1 entsprechende Seitenansicht eines Fahrzeuges mit einer anderen Ausgestaltung der Sicherheitseinrichtung;
- Fig. 4: ein schematisches Funktionsschaltbild zur Erläuterung von Funktionsverbindungen;

In allen Figuren ist ein insbesondere fahrerlos zu betreibendes Fahrzeug 1 gezeigt. Dieses Fahrzeug in den gezeigten Ausführungsbeispielen hat einen Fahrzeugkörper 2 an einem Ende und Lasttraggabelarme 3, 4 am anderen Ende. Der Fahrzeugkörper 2 enthält ein Steuerpult 5 mit einem Paneel 6, in welches Befehle eingegeben werden können, und mit einem Gehäuse 58 im unteren Teil des Fahrzeugkörpers 2 für dargestellte Energiequellen 42, wie Batterien, Antriebsmotoren 43, Pumpeneinrichtungen und Quellen 44 für hydraulische Strömungsmittel, um die am Fahrzeug erforderlichen Bewegungen herbeizuführen. Ferner sind Steuerkreise 45 enthalten, die mit dem Steuerpult 5 verbunden sind. Ferner ist an dem Steuerpult ein Lenkrad 46 angeordnet, um bei Bedarf eine Hilfslenkung durchzuführen. Das gezeigte Fahrzeug besitzt nach formaler Darstellung nach unten gerichtete Sensoren 49, welche das Fahrzeug fahrerlos längs eines Leitdrahtes führen. Weiterhin ist am Fahrzeugkörper 2 an der von der Lasttraggabel mit den Gabelarmen 3, 4 abgekehrten Seite ein nur in Umrissen dargestellter Auflaufschutz 7 angeordnet.

Unter den Lasttraggabelarmen 3, 4 befinden sich Stützrollen oder Stützrollen-Anordnungen 8, auf welchen auch die Lasttraggabelarme 3, 4 am Boden geführt sind. Der Fahrzeugkörper 2 besitzt wenigstens ein lenkbares Antriebsrad 9, das zweckmäßig in der Mittelachse angeordnet ist, und Stützrollen oder Räder 10, die seitlich etwa in der Ebene eines Hubgerüstes 11, und zwar in der Nähe der Außenseiten angeordnet sind.

Das Fahrzeug ist in einfacher Weise so ausgeführt, daß es in einer unteren Stellung mit eingezogenen oder angelegten Stützrollen 8 unter eine Last oder in eine Palette einfahren kann und dann unter Anhebung der Lasttraggabelarme 3, 4 und Ausfahren oder Abklappen der Stützrollen 8 nach unten abheben kann.

Für die Stützrollen oder -räder 8 ist ein Antrieb vorgesehen, wie es beispielsweise in der britischen Patentschrift 649,625 dargestellt ist.

Die Lasttraggabelarme 3, 4 sind in einem Abschnitt 12 des Fahrzeugkörpers in der Ebene des Hubgerüstes 11 gelagert und geführt. In diesem Abschnitt sind auch Antriebe, insbesondere Zylinderkolbenanordnungen zur Höhenbewegung der fahrzeugseitigen Enden der Lasttraggabelarme 3, 4 untergebracht.

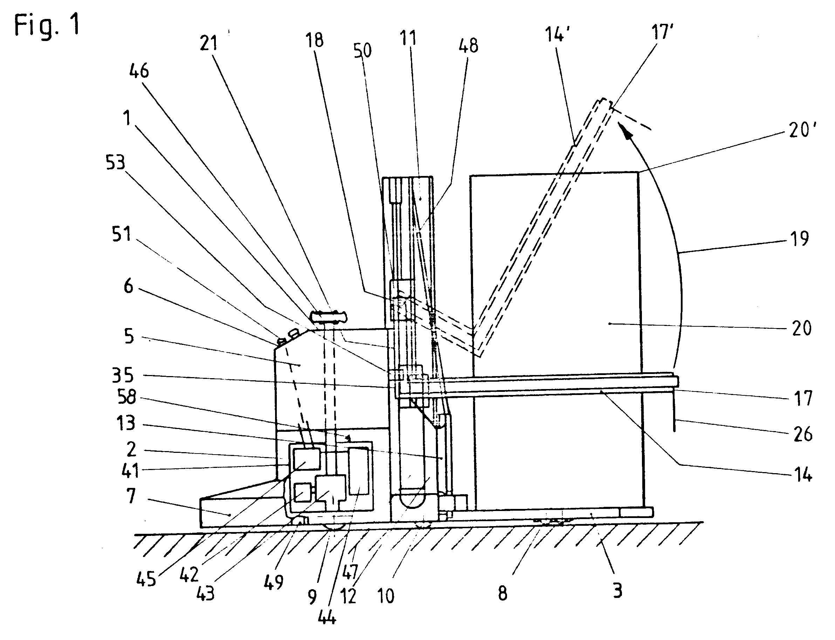

Es wird einbezogen, daß die Lasttraggabelarme 3, 4 als Gabelträger an einem Schlitten 13 angeordnet sind, der mit einem an sich bekannten Antrieb in Form eines hydraulischen Zylinderkolbenantriebs 47 und einer Zugkettenanordnung 48 beispielsweise entsprechend der US-Patentschrift 4,506,764, Fig. 1, an dem Hubgerüst 11 hochgefahren werden kann.

Solche Fahrzeuge sind an sich in jeweiligen Ausführungen bekannt, wobei sich das besondere, beschriebene Fahrzeug dadurch von den bekannten unterscheidet, daß auch eine mit Stützrollen versehene Lasttraggabel mittels eines Schlittens an einem Hubgerüst 11 auf- und abwärts bewegt werden kann, wobei andererseits auch ein Betrieb als Gabelhubtransportwagen einbezogen wird, mit welchem Lasten nur wenig über der Stellfläche abgehoben und transportiert werden.

Einbezogen wird, daß ein solches Fahrzeug mit einem Fahrerstand oder -sitz versehen sein kann. Das beschriebene Fahrzeug ist für einen fahrerlosen Betrieb vorgesehen und längs eines im Boden verlegten Leitelements oder dergleichen verfahrbar zur Aufnahme der Signalgrößen des Leitelements in Sensoren, die im Fahrzeug angeordnet sind. Wenn ein solches Fahrzeug nach Fig. 1 nach links fährt, genügt der Auflaufschutz 7 als Sicherheitseinrichtung, insbesondere gegen Hindernisse in Bodenhöhe. Völlig ungeschützt sind aber solche Fahrzeuge, wenn sie unter einleitend genannten Gesichtspunkten mit dem Lastträger, d. h. den Lasttraggabelarmen 3, 4 nach vorn gefahren werden.

Unter der eingangs angegebenen Aufgabenstellung ist nun ein Schutz wenigstens nach vorn, d. h. in Richtung der Spitzen der Lasttraggabelarme ein Bügel 14 in der speziellen Ausführung als Sicherheitseinrichtung angeordnet. Der Bügel hat Seitenstreben 15, 16 und eine diese verbindende Stirnstrebe 17. Die Seitenstreben sind um eine Querachse 18 verschwenkbar am Fahrzeugkörper, beispielsweise auch an einem Teil des Hubgerüstes 11 angeordnet. Im Bereich der Querachse sind dabei Antriebsmittel 50 als Klappantrieb vorgesehen, um den Bügel 14 in Richtung des Pfeils 19 in eine obere, gestrichelt gezeichnete Stellung 14' zu verschwenken.

Die Betätigung dieser Antriebsmittel erfolgt im Stillstand des Fahrzeugs durch Steuerhebel 51, die auf dem Paneel 6 angeordnet sind und mit dem Steuerkreis 45 verbunden sind.

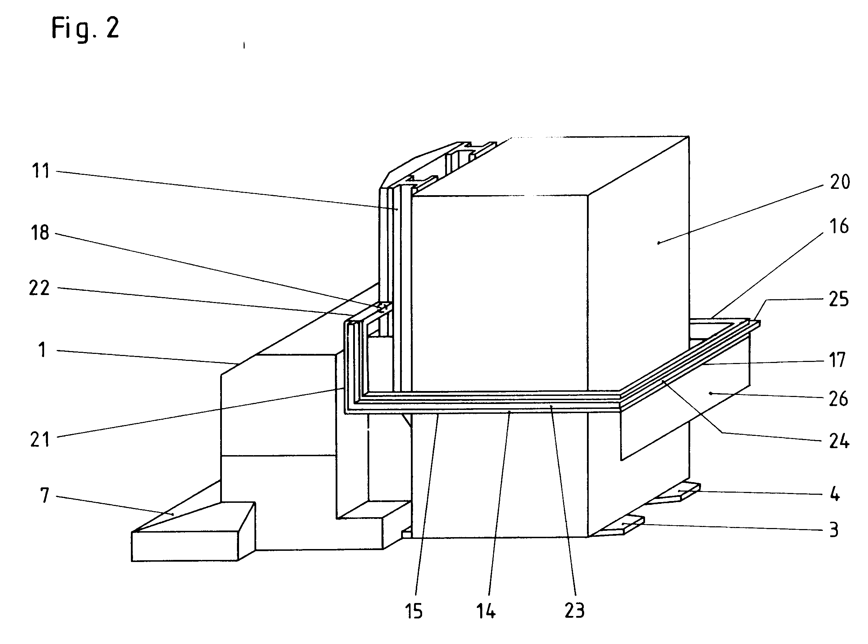

Dies hat den Zweck, den Raum über den Lasttraggabeln 3, 4 entweder in der in den Fig. 1 und 2 gezeigten Stellung durch den Bügel 14 einzufassen und zu sichern oder aber ihn zur Aufnahme und Freigabe von Lasten 20 zu öffnen. Hierbei zeigt das Ausführungsbeispiel in den Fig. 1 und 2 eine Last 20, die größtmögliche Umrisse einer aufzunehmenden Last hat. Unter dieser Ausführung sind die Anlenkung des Bügels 14, insbesondere die Querachse 18 so angeordnet, daß die Stirnstrebe 17 frei auch um eine obere Ecke 20' der Last 20 verschwenkbar ist, um den Raum über dem Lastträger aus den Lasttraggabelarmen 3, 4 nach vorn, d. h. in Richtung der Lasttraggabelarme freizugeben. Die Seitenstreben 15, 16 verbleiben dabei in ihrer seitlichen Anordnung.

Eine günstige Lösung unter diesem Gesichtspunkt liegt darin, daß die Seitenstreben 15, 16 L-förmige und in der Einsatzstellung parallel zum Hubgerüst 11 verlaufende Schenkel 21 aufweisen, an deren oberen Enden ein Zusammenschluß mit der Querachse vorgesehen ist. Zu diesem Zweck sind die Seitenstreben 15, 16 nach außen abgesetzt und an den oberen Enden der Schenkel 21 sind nach innen gerichtete, im wesentlichen parallel zur Stirnstrebe 17 verlaufende Lagerträger 22 vorgesehen, die mit der Querachse 18 verbunden sind oder einen Teil der Querachse bilden. Diese Ausführung berücksichtigt, daß ein Hubgerüst 11 im wesentlichen zur Mitte eingezogen ist im Vergleich mit den äußeren Umrissen eines Fahrzeugkörpers und daß die Seitenstreben der durch den Bügel 14 gebildeten Sicherheitseinrichtung so weit nach außen abgesetzt sein müssen, daß auch verhältnismäßig breite Lasten 20 unbehindert aufgenommen oder abgesetzt werden können.

In der gezeigten Ausgangsstellung bildet der Bügel 14 eine Sicherheitseinrichtung als Auflaufschutz vorteilhaft in der Brusthöhe einer natürlichen Person. Sowohl die Seitenstreben 15, 16 als auch die Stirnstrebe 17 sind mit Kontaktleisten 23, 24, 25, insbesondere auch in Form von Schaumstoffbumpern versehen, die bei einer Berührung einen Fahrzeugstop oder einen Schleichgang mit dem Ergebnis eines Fahrzeugstops veranlassen derart, daß das Fahrzeug zum Stillstand kommt, bevor feste Fahrzeugteile oder die Last ein Hindernis berühren.

Unter diesem Gesichtspunkt befindet sich an der Stirnstrebe 17 auch eine Schürze 26, deren Berührung und Auslenkung eine entsprechende Antriebssteuerung auslöst.

Die Ausführung in Fig. 1 und 2 mit der L-förmigen Ausgestaltung der Seitenstreben 15, 16 ist deshalb besonders vorteilhaft, weil eine verhältnismäßig kurze Ausführung des Bügels 14 auch über eine hohe Last 20 zur Freigabe derselben nach vorn abgeklappt werden kann.

Die Ausführung nach den Fig. 1 und 2 zeigt eine einfache Ausgestaltung, in welcher auch ein niedriges Hubgerüst oder nur ein Ansatz eines solchen als Lagerelement erforderlich ist, weil durch die Aufklappbewegung die Stirnstrebe 17 aus der Sicherheitsstellung bringbar ist. Eine Hubgerüsthöhe in der gezeigten Form oder insbesondere auch noch über die Höhe der Last 20 hinausgehend bezieht ein, daß der Bügel 14 an einem eigenen Schlitten angeordnet ist und damit seine Lagerstelle, insbesondere die Querachse 18 im Hubgerüst hochgefahren werden kann. Dieses wird einbezogen, um besondere Freiräume zu schaffen. Unter diesem Gesichtspunkt können die Seitenstreben auch kurz ausgeführt werden.

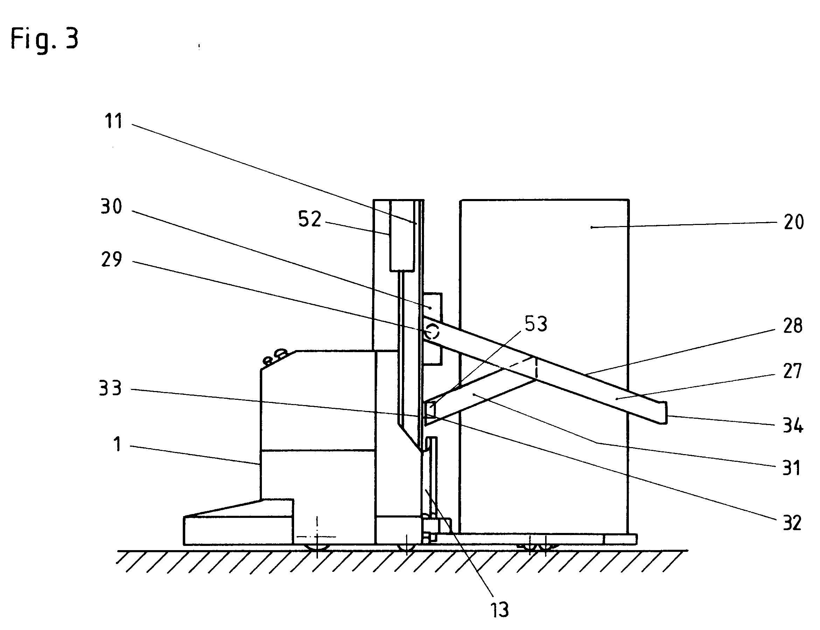

Die Fig. 3 stellt eine entsprechende Ausführung dar mit dem Unterschied, daß ein Bügel 27 Seitenstreben 28 hat, welche bei 29 gelenkig an einer Baugruppe 30, gegebenenfalls einem Schlitten am Hubgerüst 11 gelagert sind. Etwa in der Mitte der Seitenstreben greift ein nach unten abgewinkelter Stützschenkel 31 an, der ein Widerlager 32 aufweist und der die in Fig. 3 dargestellte Einsatzstellung des Bügels 27 festlegt. In dieser Ausführung ist bei 29 entsprechend der Beschreibung der Fig. 1 und 2 wie bei der Querachse 18 ein Schwenkantrieb angeordnet. Einbezogen wird dann aber auch, daß an der Stelle 33, an der das Widerlager 32 seine Abstützung findet, Druckschalter angeordnet sind, die die Sicherheitseinrichtung einschalten, sowie der Bügel 27 seine Sicherheitseinstellung erreicht hat.

Im Falle einer schwenkbaren Lagerung sind Antriebsmittel 50 gemäß Fig. 1 als Klappantrieb angeordnet.

Wenn die Baugruppe 30 als Schlitten am Hubgerüst geführt ist, um den Bügel 27 in der Höhe einstellbar zu machen, dann kann in einer solchen Ausführung beispielsweise am oberen Rand des Hubgerüstes 11 ein hydraulischer Antrieb 52 in Form einer Zylinderkolbenvorrichtung angeordnet sein, um diesen Schlitten direkt oder gegebenenfalls auch mittels umgelenkter Ketten zu bewegen.

Beispielsweise ist an dem Widerlager 32, welches mit der ein Gegenwiderlager 33 bildenden Stelle in Anlage kommen kann, eine Schalteinrichtung 53 in Form eines erwähnten Druckschalters angeordnet, welcher das Fahrzeug erst bei eingerückter Sicherheitseinrichtung freigibt, aber den Fahrantrieb sperrt, wenn die Sicherheitseinrichtung zur Freigabe der Last 20 ausgerückt ist.

In dieser Ausführung ist auch eine Stirnstrebe 34 angeordnet etwa eine Stirnstrebe 17 nach den Fig. 1 und 2.

Die Ausführung nach der Fig. 3 hat den Vorteil gegenüber Fig. 1 und 2, daß der Lagerpunkt 29 über der Einsatzhöhe der Stirnstrebe 34 angeordnet ist, so daß dann der Schwenkradius zum Übergreifen der Last 20 an einem hohen Punkt einsetzt, wie auch in anderer Ausgestaltung aus den Fig. 1 und 2 hervorgeht. Wenn auch zwischen der Stelle 33 und dem Widerlager 32 Betätigungsschalter zum Einsatz der Sicherheitseinrichtung angeordnet sein können, versteht sich, daß solche Schalter auch bei 35 in Fig. 1 am Winkel der Seitenstreben des Bügels 14 angeordnet sein können.

Im übrigen gelten die Bemerkungen zu den Fig. 1 und 2 auch zur Fig. 3.

Es versteht sich, daß bei der Ausführung nach den Fig. 1 und 2 die Seitenstreben 15, 16 teleskopisch ausgefahren sein können, um verschiedene Räume um eine Last 20 zu umschließen bzw. - und das ist ein besonderer Gesichtspunkt - um einen solchen Raum einer Last 20 mit genügendem Abstand zu umschließen und beim Abklappen in die Stellung 14' nach Fig. 1 einen zusätzlichen Freiraum zu ermöglichen. Auch nach der Ausführung nach Fig. 3 ist eine teleskopische Ausgestaltung der Seitenstreben möglich.

Eine derartige teleskopische Ausgestaltung schließt in den angelenkten Schwenkteilen der Seitenstreben die Unterbringung eines besonderen Antriebs zum Ausfahren teleskopisch gelagerter äußerer Teile ein. Ein solcher Antrieb kann im Rahmen der anderen Antriebe als hydraulische oder pneumatische Zylinderkolbeneinrichtung, aber auch als Elektromotor ausgeführt sein, der eine Mutter antreibt, durch welche eine hindurchgeführte Spindel bewegbar ist, an der die äußeren Enden der Seitenstreben angeordnet sind.

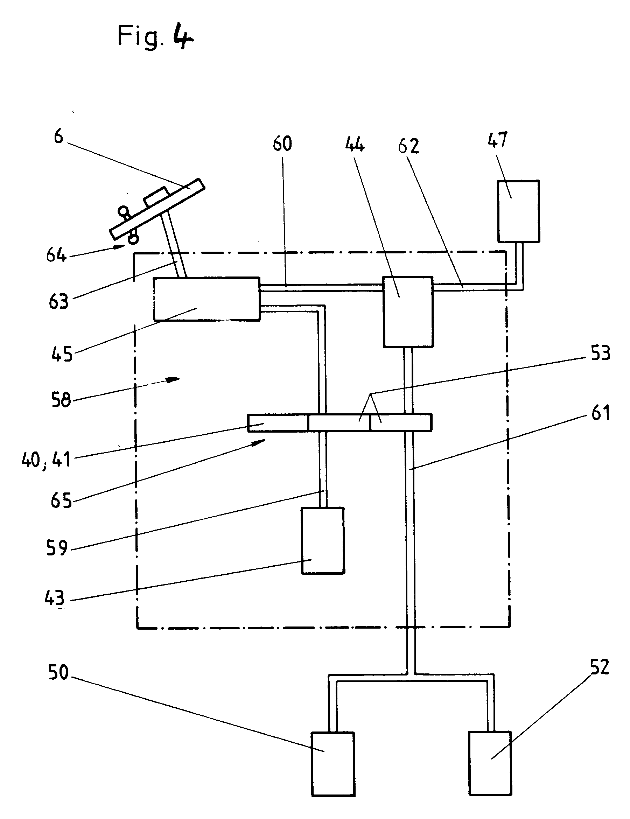

In Fig. 4 ist das Gehäuse 58 mit dem Steuerkreis 45, dem Antriebsmotor 43 und den Pumpeneinrichtungen und Quellen 44 für hydraulischen Antrieb gezeigt. Hierbei sind zunächst die Ein- und Ausschaltmittel 64 schematisch dargestellt, die in üblicher Weise vorgesehen sind. Die Anschlüsse am Steuerkreis 45 sind einmal durch die Funktionsleitung 59 zum Antriebsmotor 43 und zum anderen durch die Funktionsleitung 60 zu den Pumpeneinrichtungen und Quellen 44 geführt.

Von dieser Baugruppe 44 gehen Funktionsleitungen 61 zu den Antriebsmitteln bzw. Klappantrieb 50 und zum hydraulischen Antrieb 52 für den Schlitten der Sicherheitseinrichtung und weitere Funktionsleitungen 62 zum hydraulischen Zylinderkolbenantrieb 47 für einen Hubschlitten. In den Funktionsleitungen 59 und 61 sind die Schaltmittel 65 angeordnet, welche von der Schalteinrichtung 53 bei klappbarer Einstellung des Sicherheitsbügels gesteuert sind. In diesem Zusammenhang kann ein weiterer Schalter einbezogen werden, der in Abhängigkeit von der Stellung, beispielsweise der Baugruppe 30 in der Ausführungsform als Schlitten, einbezogen wird. Diese Schaltsperre gibt wechselseitig die Funktionsleitungen 59, 61 frei, damit bei Öffnung oder Ausrückung der Sicherheitssperre das Fahrzeug stillstehend wird. Entsprechend ist es möglich, diese wechselseitig verriegelnden Schalter auch in Abhängigkeit von der Ein- oder Ausschaltung des Antriebsmotors 43 zu betätigen.

Der Steuerkreis 45 steht über weitere Funktionsleitungen 63 mit dem Paneel 6 und den auf ihm angeordneten Steuerhebeln in Verbindung, damit in Abhängigkeit davon die Antriebsteile des Fahrzeugs überhaupt ein- und ausgeschaltet werden können und auch weitere übliche Funktionen für ein Fahrzeug durchgeführt werden können. Dazu gehört die Betätigung des hydraulischen Zylinderkolbenantriebes 47, der unabhängig von Einsatz der Sicherheitseinrichtung betrieben werden kann.

## Patentansprüche

1. Sicherheitseinrichtung für Gabelfahrzeuge, die den Raum für eine aufgenommene Last (20) im Bereich der Lasttraggabelarme (3, 4) begrenzt und beim Auffahren auf ein Hindernis einen Notstop auslöst, wobei die seitliche Einfassung und Sicherung der Last (20) jeweils durch Seitenstreben (15, 16, 28) erfolgt, die innerhalb des Höhenbereichs einer natürlichen Person angeordnet sind, um so einen Notstop des Fahrzeugs vor Gefährdung einer Person auszulösen und wobei die Sicherheitseinrichtung eine Handhabung der Last (20) durch die Lasttraggabelarme (3, 4) von vorn zuläßt, dadurch gekennzeichnet, daß die Seitenstreben (15, 16, 28) die seitlichen Teile eines Bügels (14; 27) sind, der die Last (20) in der Betriebsstellung umschließt und auch nach vorn sichert und daß der Bügel (14; 27) zur Handhabung der Last (20) aus seiner Betriebsstellung herausbewegbar ist.

2. Sicherheitseinrichtung nach Anspruch 1, dadurch gekennzeichnet, daß der Bügel (14) schwenkbar am Fahrzeug (1) angeordnet und mit seinem vom Fahrzeugkörper (2) abgelegenen Rahmenteil über eine größtmögliche aufgenommene Last (20) nach oben klappbar ist.

3. Sicherheitseinrichtung nach Anspruch 2, dadurch gekennzeichnet, daß die Seitenstreben (14, 15) des Bügels (14) L-förmig nach oben abgewinkelte Schenkel (21) aufweisen, deren freies Ende am Fahrzeug (1) schwenkbar angelenkt ist.

4. Sicherheitseinrichtung nach Anspruch 2, dadurch gekennzeichnet, daß die Seitenstreben (28) Y-förmige Gestalt haben, wobei ein in der Betriebsstellung schräg nach unten gerichteter oberer Schenkel der Seitenstrebe (28) verschwenkbar am Fahrzeug (1) angelenkt ist sowie zwischen dem oberen Schenkel und dem Fahrzeugaufbau ein an diesem gegebenenfalls unter Schalterbetätigung, anlegbarer unterer Stützschenkel (31) angeordnet ist.

5. Sicherheitseinrichtung nach einem der Ansprüche 1 bis 4, dadurch gekennzeichnet, daß die Seitenstreben (15, 16, 28) an einem Hubschlitten (36) angeordnet sind, welche an einem Hubgerüst (11) des Fahrzeugs (1) nach oben aus dem Bereich einer in einer unteren Stellung, insbesondere Transportstellung, befindlichen Last (20) fahrbar ist.

6. Sicherheitseinrichtung nach einem der Ansprüche 1 bis 5, dadurch gekennzeichnet, daß der Bügel (14; 27) mit Kontaktleisten (23, 24, 25) versehen ist.

7. Sicherheitseinrichtung nach einem der Ansprüche 1 bis 6, dadurch gekennzeichnet, daß der Bügel (14; 27) nachgiebig verformbar und bis an den Rand für die Last (20) eindrückbar ist.

8. Sicherheitseinrichtung nach einem der Ansprüche 1 bis 7, dadurch gekennzeichnet, daß die Seitenstreben (15, 16, 28) des Bügel (14; 27) teleskopisch in der Länge veränderbar sind.

## Claims

1. A security device for fork lift trucks delimiting the space for a load (20) in the region of the load carrying fork arms (3,4) and initiating an emergency stop when encountering an obstacle, comprising side struts (15,16,21) each provided to laterally enclose and safeguard the load (20) which struts are located within the height range of a natural person to initiate an emergency stop of the vehicle before becoming dangerous to a person, wherein the security device allows to handle the load (20) from the front side by means of load supporting fork arms (3,4),
characterized in that the side struts (15,16,28) define the la-teral parts of a bracket (14;27) enclosing the load (20) in the operative position and safeguarding the load towards the front and that the bracket (14;27) can be moved out of its operative position for handling the load (20).

2. The security device of claim 1,
characterized in that the bracket (14) is pivotally mounted on the vehicle (1) to be pivoted upwardly with its frame por-tion facing away from the vehicle frame (2) bypassing the maximum possible height of a load (20) picked up.

3. The safety device of claim 2,
characterized in that the side struts (14,15) of the bracket (14) are provided with L-shaped legs which are upwardly angled, wherein the free ends of the legs are pivotally mounted on the vehicle (1).

4. The security device of claim 1,
characterized in that the side struts (28) are Y-shaped, comprising an upper leg which is angularly downwardly directed in the operative position which upper leg is pivoted to the vehicle (1) and comprising a lower supporting leg (31) located between the upper leg and the vehicle frame, including switching means as the case may be.

5. The security device of one of claims 1 to 4,
characterized in that the side struts (15,16,28) are attached to a lifting slide (36) which can be moved along a lifting frame (11) of the vehicle (1) upwardly out of the range of a load (20) which is placed in a lower position, in particular a travelling position.

6. The security device of one of claims 1 to 5,
characterized in that the bracket (14;27) is provided with contact ledges (23,24,25).

7. The security device of one of claims 1 to 6,
characterized in that the bracket (14;27) is resiliently shaped and can be displaced up to the edge of the load (20).

8. The security device of one of claims 1 to 7,
characterized in that the side struts (15,16,28) of the bracket (14;27) are telescopically adjustable in length.

## Revendications

1. Dispositif de sécurité pour chariots à fourche, qui délimite, pour la charge (20) soulevée, le volume disponible dans la zone des bras de fourche (3, 4) destinés à porter la charge, et qui émet un signal d'arrêt d'urgence si un obstacle est rencontré, étant entendu que le bordage latéral et la sécurité latérale de la charge (20) sont l'un et l'autre assurés au moyen de barres latérales (15, 16, 28) disposées à l'intérieur de la zone ayant une hauteur correspondant à celle ---- d'une personne normale, pour émettre ainsi un signal d'arrêt d'urgence du véhicule avant qu'une personne soit mise en péril, et étant entendu que le dispositif de sécurité permet aux bras porteurs (3, 4) de la fourche de manutentionner la charge (20) depuis l'avant, caractérisé en ce que les barres latérales (15, 16, 28) sont les parties latérales d'un arceau (14; 27) qui, dans sa position de travail, entoure la charge (20) et --- également assure la sécurité vers l'avant, et en ce que l'arceau (14; 27) peut être retiré de sa position de travail pour manutentionner la charge (20).

2. Dispositif de sécurité suivant la revendication 1, caractérisé en ce que l'arceau (14) est monté sur le chariot (1) de façon à pouvoir pivoter et en ce qu avec sa pièce formant cadre écartée du corps du chariot, il peut être relevé vers le haut, au dessus de la plus grosse charge soulevée (20) possible.

3. Dispositif de sécurité suivant la revendication 2, caractérisé en ce que les barres latérales (15, 16) de l'arceau (14) comprennent des parties (21) coudées vers le haut, en forme de L, dont l'extrémité libre s'articule sur le chariot (1) avec possibilité de pivoter.

4. Dispositif de sécurité suivant la revendication 2, caractérisé en ce que les barres latérales (28) sont conçues en forme de Y, étant entendu que le bras supérieur de ces barres latérales (28), incliné vers le bas en position de travail, s'articule sur le chariot (1) de façon à pouvoir pivoter, et étant entendu qu'entre le bras supérieur et le tablier du chariot, est disposé un bras d'appui inférieur (31), pouvant s'appuyer contre ce tablier, le cas échéant en actionnant un interrupteur.

5. Dispositif de sécurité suivant l'une quelconque des revendications 1 à 4, caractérisé en ce que les barres latérales (15, 16, 28) sont disposées sur un tablier élévateur coulissant (36) pouvant se déplacer sur un cadre de levage (11) du chariot (1), vers le haut, depuis la zone où la charge (20) se trouve en position basse, en particulier en position de transport.

6. Dispositif de sécurité suivant l'une quelconque des revendications 1 à 5, caractérisé en ce que l'arceau (14; 27) est équipé de baguettes de contact (23, 24, 25).

7. Dispositif de sécurité suivant l'une quelconque des revendications 1 à 6, caractérisé en ce que l'arceau (14; 27) peut se déformer élastiquement et qu'il peut être poussé jusque contre le bord de la charge (20).

8. Dispositif de sécurité suivant l'une quelconque des revendications 1 à 7, caractérisé en ce que l'on peut modifier de façon télescopique la longueur des barres latérales (15, 16, 28) de l'arceau (14; 27).
